# EUROPÄISCHE PATENTSCHRIFT

(11) **EP 1 287 269 B1**
(45) Veröffentlichungstag und Bekanntmachung des Hinweises auf die Patenterteilung: **04.04.2007**
(21) Anmeldenummer: 01960271.3
(22) Anmeldetag: 06.06.2001
(51) Int. Cl.: F16D 55/226

(54) **SCHWIMMSATTEL FÜR EINE SCHEIBENBREMSE UND SCHEIBENBREMSE**
FLOATING CALIPER FOR A DISK BRAKE, AND DISK BRAKE
ETRIER FLOTTANT POUR FREIN A DISQUE, ET FREIN A DISQUE

(30) Priorität: 07.06.2000 DE 10027783; 08.06.2000 DE 10027996
(43) Veröffentlichungstag der Anmeldung: 05.03.2003
(73) Patentinhaber: Lucas Automotive GmbH, 56070 Koblenz (DE)
(72) Erfinder: STAHL, Peter, 53474 Bad Neuenahr-Ahrweiler (DE); GIESE, Hans, Martin, 56751 Polch (DE)
(74) Vertreter: von Hellfeld, Axel
(86) Internationale Anmeldenummer: PCT/EP2001/006396
(87) Internationale Veröffentlichungsnummer: WO 2001/094804

(56) Entgegenhaltungen:
- WO-A-98/02338
- DE-A- 4 401 843
- US-A- 5 464 077
- PATENT ABSTRACTS OF JAPAN vol. 1999, no. 08, 30. Juni 1999 (1999-06-30) & JP 11 063040 A (NISSIN KOGYO KK), 5. März 1999 (1999-03-05)

## Beschreibung

Die Erfindung betrifft einen Schwimmsattel für eine Scheibenbremse gemäß dem oberbegriff des Anspruches 1, dessen Merkmale aus der US-A-5 464 077 bekannt sind, sowie eine damit ausgerüstete Scheibenbremse, insbesondere eine Schwimmsattel-Teilbelag-Scheibenbremse.

Bevorzugt betrifft die Erfindung eine Schwimmsattel-Teilbelag-Scheibenbremse mit zwei Betätigungszylindern. Derartige Scheibenbremsen sind dem Fachmann allgemein bekannt.

Im Fahrzeugbau geht es zunehmend um Gewichtsersparnis ohne Einbuße hinsichtlich Leistungsfähigkeit und Sicherheit.

Bei Schwimmsattelbremsen, um die es hier geht, werden in bekannter Weise zwei Bremsbacken beidseitig auf die rotierende Bremsscheibe gedrückt und die Reibungskräfte bewirken die Bremsung. Die Reibungskräfte werden über den Schwimmsattel in den Bremsträger eingeleitet. Es müssen sich deshalb beim Bremsen notwendigerweise Teile der Bremse verbiegen und es geht insoweit beim Bremsenbau darum, mit möglichst geringem Gewicht der Bremse eine möglichst hohe Biegesteifigkeit zu erreichen. Dies ist das Ziel der vorliegenden Erfindung.

Das deutsche Gebrauchsmuster DE 82 36 515 U1 beschreibt eine Scheibenbremse, bei der der Schwimmsattel Rippen aufweist, die die Biegesteifigkeit unter Einsparung von Gewicht erhöhen.

Bei Scheibenbremsen mit zwei Betätigungszylindern, die dem Fachmann allgemein bekannt sind und bei denen die vorliegende Erfindung zum Einsatz kommt, ist es im Stand der Technik bekannt, den äußeren Bremsbelag mit drei Stützfingern abzustützen, über die die Spannkraft auf den äußeren Bremsbelag eingeleitet wird.

Im Stand der Technik wird die Brücke des Schwimmsattels (also der Teil des Sattels, der die Bremsscheibe überbrückt) mehr oder weniger massiv ausgebildet oder durch Rippen verstärkt, um die oben angesprochene hohe Biegesteifigkeit zu erreichen. Der Brückenbereich des Schwimmsattels ist dabei fest, in der Regel gußtechnisch integral, mit dem oder den (zwei) Betätigungszylindern verbunden.

Aus der US-A-5,464,077 ist eine Scheibenbremse mit zwei Bremszylindern bekannt. Der Schwimmsattel besitzt Öffnungen, die zur Biegesteifigkeit beitragen sowie das Gewicht des Schwimmsattels reduzieren. Der Schwimmsattel weist einen Brückenarm auf, der sich in Richtung der beiden Bremszylinder verlaufende Äste aufzweigt.

Die DE-A-44 01 843 beschreibt einen Schwimmsattel für eine Scheibenbremse mit einem Bremszylinder. Um das Gewicht des Schwimmsattels zu reduzieren, ohne seine Steifigkeit zu vermindern, verjüngt sich die in Umfangsrichtung gesehene Breite des Schwimmsattels von einer dem Bremszylinder abgewandten Seite zum Bremszylinder hin. Des Weiteren ist in der Mitte des Schwimmsattels ein radialer Durchbruch angeordnet, durch den hindurch Luft strömen kann, um die beim Bremsen an der Bremsscheibe und den Bremsbelägen auftretende Wärme abzuführen.

Die vorliegende Erfindung schlägt zur Erreichung des oben genannten Ziels einen Schwimmsattel für eine Scheibenbremse mit den Merkmalen des Anspruches 1 vor.

Die Gabelung, also die Stelle, an der sich der Brückenarm in die zwei Äste verzweigt, ist bevorzugt so angeordnet, daß sie im Einbauzustand der Bremse zumindest annähernd über der Bremsscheibe oder unmittelbar daneben liegt.

Die Erfindung wird bei einer Schwimmsattelscheibenbremse mit zwei Betätigungszylindern, die als solche bekannt ist, eingesetzt. Die Verzweigung von zumindest einem Brückenarm ist so ausgelegt, daß jeweils einer der Äste zu einem der Betätigungszylinder führt. Bei einer Schwimmsattelbremse mit zwei Betätigungszylindern sind bevorzugt drei Brückenarme vorgesehen, wobei bevorzugt der mittlere Brückenarm in der beschriebenen Weise verzweigt ist.

Auf der den Betätigungszylindern gegenüberliegenden Seite des Schwimmsattels ist bevorzugt vorgesehen, daß die Brückenarme durch eine integral mit ihnen ausgebildete Querstrebe verbunden sind.

Besonders bevorzugt ist vorgesehen, daß die Brückenarme in ihrer Längsrichtung jeweils mit einem Stützfinger der Abstützung fluchten, wobei die Stützfinger etwa senkrecht stehen zur Längsrichtung der Brückenarme. Diese Stützfinger dienen also zum Abstützen und Einleiten der Spannkraft in den äußeren Bremsbacken. Ihre Ausgestaltung in der beschriebenen Weise ermöglicht eine hohe Stabilität des Gesamtsystems der Bremse, insbesondere eine hohe Biegesteifigkeit, bei weiterer Gewichtseinsparung.

Eine weitere bevorzugte Ausgestaltung der Erfindung sieht vor, daß die Brückenarme über im wesentlichen den ganzen Abstand zwischen den Betätigungszylindern und der Abstützung voneinander getrennt verlaufen. Die Brückenarme sind bei dieser Ausgestaltung also weitestgehend unabhängig voneinander und werden auf der einen Seite der Bremse (der fahrzeuginneren Seite) durch die integral ausgebildeten zwei Betätigungszylinder miteinander verbunden und auf der anderen Seite durch eine relativ schlanke Querstrebe, d. h. eine Strebe, die quer zur axialen Mittelebene der Bremse steht. Die axiale Mittelebene von Scheibenbremsen ist als die Ebene definiert, in der die Achse der Scheibe liegt und die die Symmetrieebene der Bremse darstellt. Bei einer Bremse mit zwei Betätigungszylindern verläuft diese Ebene also zwischen den Betätigungszylindern.

Bevorzugt verlaufen die verzweigten Äste des gegabelten Brückenarmes nicht genau parallel zu der axialen Symmetrieebene der Bremse, sondern unter einem kleinen Winkel dazu nach außen, z. B. unter Winkeln im Bereich von 3 bis 15 Grad.

Die äußeren Brückenarme, also die Arme auf der Einlaufseite und der Auslaufseite der Bremse, verlaufen ebenfalls bevorzugt nicht genau parallel zur axialen Symmetrieebene der Bremse, sondern unter geringen Neigungswinkeln, die ebenfalls im vorstehend genannten Bereich liegen, wobei die Neigungen der Äste einerseits und der genannten äußeren Brückenarme andererseits genau umgekehrt gerichtet sind, wie es in den Figuren deutlich zu erkennen ist.

Die Erfindung betrifft auch eine Scheibenbremse mit einem Schwimmsattel, der zumindest einige der vorstehend genannten Merkmale aufweist.

Nachfolgend wird ein Ausführungsbeispiel der Erfindung anhand der Zeichnung näher erläutert. Es zeigt:
- Figur 1: eine perspektivische Ansicht einer Scheibenbremse mit einem Schwimmsattel;
- Figur 2: eine Draufsicht auf die Scheibenbremse mit Schwimmsattel gemäß Figur 1;
- Figur 3: eine perspektivische Darstellung eines Schwimmsattels alleine; und
- Figur 4: eine Draufsicht auf den Schwimmsattel gemäß Figur 3.

In den Figuren ist ein Schwimmsattel 10 einer SchwimmsattelScheibenbremse dargestellt, wobei als solches bekannte Teile der Bremse, wie z. B. Einzelheiten des Bremsträgers, dessen Befestigung am Fahrzeug, und die Bremsscheibe weggelassen sind, um die Einzelheiten des Schwimmsattels besser herauszustellen.

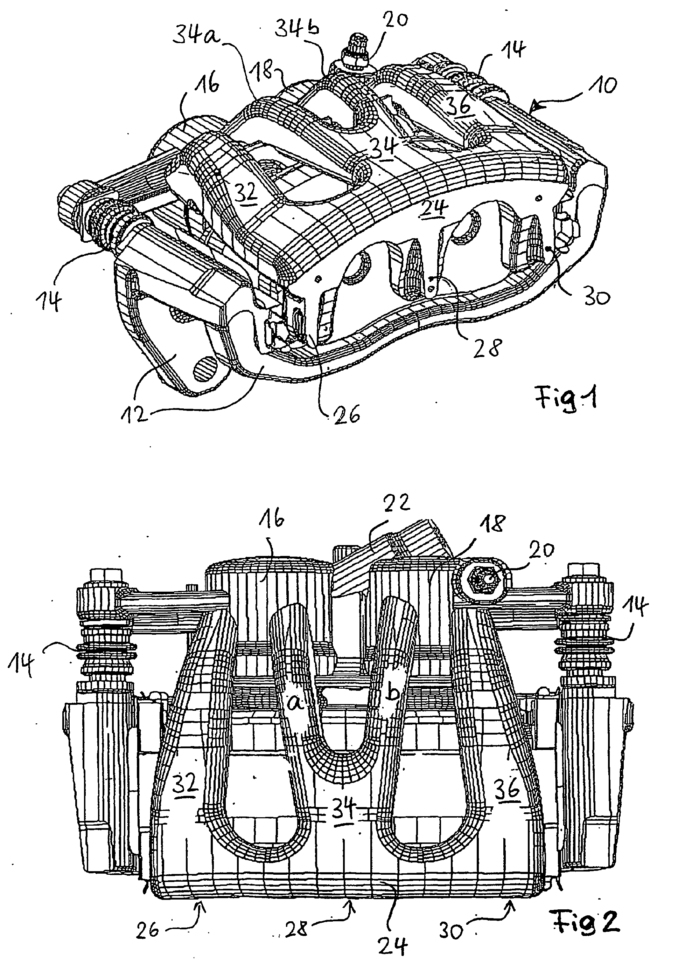

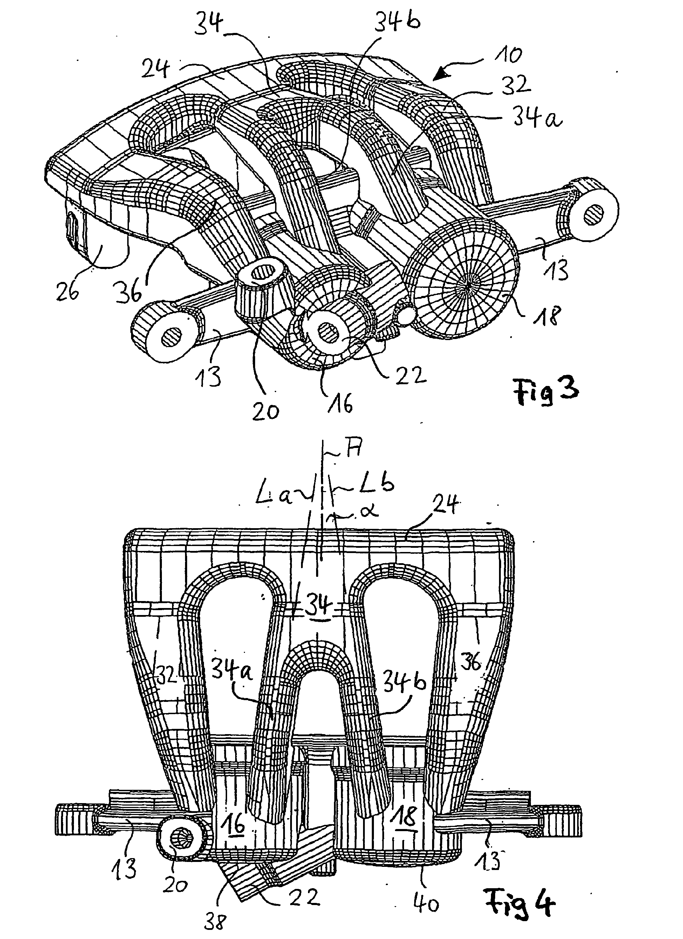

Der Schwimmsattel 10 ist an einem Bremsträger 12 befestigt. Hierzu dienen Ausleger 13 am Schwimmsattel (vgl. Figur 3, Figur 4).

Der Schwimmsattel 10 ist in bekannter Weise auf Bolzenführungen 14 am Bremsträger in axialer Richtung der Bremse, d. h. in Richtung der Achse der Scheibe, beweglich geführt.

Beim dargestellten Ausführungsbeispiel weist der Schwimmsattel 10 zwei Betätigungszylinder 16, 18 für Bremskolben (nicht gezeigt) in bekannter Weise auf. Über einen Hydraulikfluideinlaß 22 werden die Betätigungszylinder 16, 18 mit Hydraulikflüssigkeit versorgt. Mit 20 ist ein Stutzen bezeichnet für eine Entlüfterschraube.

Auf der den Betätigungszylindern gegenüberliegenden Seite, also auf der im Einbauzustand fahrzeugäußeren Seite, weist der Schwimmsattel 10 eine quer zur Symmetrieebene (Figur 4) der Bremse stehende Querstrebe 24 auf. Von der Querstrebe 24 erstrecken sich im wesentlichen senkrecht zur Hauptebene des Sattels, d. h. zumindest annähernd parallel zur Symmetrieebene der Bremse, Stützfinger 26, 28, 30. Die Stützfinger 26, 28, 30 stehen also im wesentlichen senkrecht auf der Hauptebene des Sattels 10, die durch die Brückenarme 32, 36 verläuft, also senkrecht zur axialen Symmetrieebene der Bremse, die die Längsachse A der Bremsscheibe enthält.

Die Stützfinger 26, 28, 30 sind in bezug auf die Brückenarme 32, 34, 36 fluchtend angeordnet, d. h. der Stützfinger 26 fluchtet, in Richtung der Achse gesehen, mit dem Brückenarm 32, der Stützfinger 28 fluchtet mit dem Brückenarm 34 und der Stützfinger 30 fluchtet mit dem Brückenarm 36.

Alle in Figur 3 gezeigten Teile des Schwimmsattels sind integral geformt, d. h. gegossen, also die Betätigtingszylinder 16, 18, die Brückenarme 32, 34, 36, die Querstrebe 24 und die Stützfinger 26, 28, 30 und auch die Ausleger 13 zur Befestigung am Bremsträger.

Wie insbesondere den Figuren 2 und 4 zu entnehmen ist, ist beim dargestellten Ausführungsbeispiel der mittlere Brückenarm 34 in zwei Äste 34a, 34b verzweigt. Der Ast 34a ist integral mit dem Betätigungszylinder 16 und der Ast 34b ist integral mit dem Betätigungszylinder 18 verbunden. Die Gabelung, also die Stelle, an der sich der Brückenarm 34 in die beiden Äste 34a, 34b verzweigt, liegt etwa mittig (mit einer Abweichung von ± 25 %) zwischen der Querstrebe 24 mit den Stützfingern und der Vorderkante der Betätigungszylinder 16, 18.

Die verzweigten Äste 34a, 34b des mittleren Brückenarmes 34 verlaufen gemäß Figur 4 beim dargestellten Ausführungsbeispiel nicht genau parallel zur Symmetrieebene der Bremse, die in Figur 4 senkrecht zur Zeichnungsebene steht und die Achse A der Bremse enthält. Vielmehr sind die Äste 34a, 34b in der dargestellten Weise in bezug auf die Symmetrieebene um den Winkel α gewinkelt, der zwischen 3° und 15°, bevorzugt zwischen 3° und 10° beträgt. Die Neigung ist gemäß Figur 4 so, daß die Äste 34a, 34b von der fahrzeugäußeren Seite zur fahrzeuginneren Seite auseinanderlaufen. Die Längsachsen La und Lb der beiden Äste 34a bzw. 34b schneiden sich in der Symmetrieebene etwas außerhalb der Abstützung für den fahrzeugäußeren Bremsbacken, die durch die Querstrebe 24 und die Stützfinger 26, 28, 30 gebildet wird.

Bei Betätigung der Bremse wird die Spannkraft auf den äußeren Bremsbelag (nicht gezeigt), der von der Querstrebe 24 und den drei Stützfingern 26, 28, 30 abgestützt wird, in bekannter Weise durch Verschiebung des Sattels aufgrund einer Betätigung der Betätigungskolben (nicht gezeigt), die in den Betätigungszylindern 16, 18 geführt sind, eingeleitet. Die axiale Spannkraft wird über die Böden 38, 40 der Zylinder 16, 18, die Zylinderwände und die Brückenarme 32, 34, 34a, 34b, 36 und die Querstrebe 24 auf die Stützfinger 26, 28, 30 übertragen.

Die auf der Einlaufseite und der Auslaufseite der Bremse angeordneten Brückenarme 32, 36 sind, bezogen auf die mittlere axiale Symmetrieebene der Bremse möglichst weit außen angeordnet.

## Patentansprüche

1. Schwimmsattel für eine Scheibenbremse, der zumindest zwei Betätigungszylinder (16, 18) aufweist und denen gegenüberliegend eine Bremsbacken-Abstützung (24, 26, 28 30) angeordnet ist, wobei zumindest ein die Betätigungszylinder (16, 18) mit der Abstützung (24, 26, 28, 30) verbindender Brückenarm (34) gegabelt ist, **dadurch gekennzeichnet, dass** der gegabelte Brückenarm (34) sich in zwei Äste (34a, 34b) gabelt, die jeweils beabstandet zueinander zu einem der Betätigungszylinder (16, 18) verlaufen.

2. Schwimmsattel für eine Scheibenbremse nach Anspruch 1, **dadurch gekennzeichnet, daß** die Gabelung zumindest annähernd mittig zwischen den Betätigungszylindern (16, 18) und der Abstützung (24, 26, 28, 30) liegt.

3. Schwimmsattel für eine Scheibenbremse nach Anspruch 2, **dadurch gekennzeichnet, daß** der Schwimmsattel (10) zwei Betätigungszylinder (16, 18) aufweist und daß jeweils einer der verzweigten Äste (34a, 34b) zu einem der Betätigungszylinder (16, 18) führt.

4. Schwimmsattel für eine Scheibenbremse nach einem der vorhergehenden Ansprüche, **gekennzeichnet durch** drei Brückenarme (32, 34, 36).

5. Schwimmsattel für eine Scheibenbremse nach einem der vorhergehenden Ansprüche, **dadurch gekennzeichnet, daß** die Brückenarme (32, 34, 36) auf seiten der Abstützung durch eine Querstrebe (24) verbunden sind.

6. Schwimmsattel für eine Scheibenbremse nach einem der vorhergehenden Ansprüche, **dadurch gekennzeichnet, daß** die Brückenarme (32, 34, 36) in ihrer Längsrichtung jeweils mit einem Stützfinger (26, 28, 30) der Abstützung fluchten, wobei die Stützfinger (26, 28, 30) etwa senkrecht stehen zur Längsrichtung der Brückenarme (32, 34, 36).

7. Schwimmsattel für eine Scheibenbremse nach einem der vorhergehenden Ansprüche, **dadurch gekennzeichnet, daß** die Brückenarme (32, 34, 36) über im wesentlichen den ganzen Abstand zwischen den Betätigungszylindern (16, 18) und der Abstützung (24, 26, 28, 30) voneinander getrennt verlaufen.

8. Schwimmsattel für eine Scheibenbremse nach den Ansprüchen 3 und 4, **dadurch gekennzeichnet, daß** nur der mittlere Brückenarm (34) gegabelt ist und von dessen verzweigten Ästen (34a, 34b) jeweils einer zu einem der zwei Betätigungszylinder (16, 18) führt.

9. Schwimmsattel für eine Scheibenbremse nach einem der Ansprüche 2 bis 8, **dadurch gekennzeichnet, daß** die Längsachsen (La, Lb) der verzweigten Äste (34a, 34b) des mittleren Brückenarmes (34) unter Winkeln (α) zwischen 3° und 15° zur Axialrichtung (A) der Bremse verlaufen.

10. Schwimmsattelscheibenbremse mit einem Schwimmsattel gemäß einem der Ansprüche 1 bis 9.

## Claims

1. Floating calliper for a disk brake, comprising at least two actuating cylinders (16, 18) and a brake shoe support (24, 26, 28, 30) lying opposite them, wherein at least one bridge arm (34) connecting the actuating cylinders (16, 18) to the support (24, 26, 28, 30) is bifurcated,
**characterized in that** the bifurcated bridge arm (34) is forked into two branches (34a, 34b) each extending, spaced from the other, towards one of the brake cylinders (16, 18).

2. Floating calliper for a disk brake according to claim 1, **characterized in that** the bifurcation lies at least approximately midway between the actuating cylindes (16, 18) and the support (24, 26, 28, 30).

3. Floating calliper for a disk brake according to claim 2, **characterized in that** the floating calliper (10) comprises two actuating cylinders (16, 18) and that one each of the fork branches (34a, 34b) leads to one of the actuating cylinders (16, 18).

4. Floating calliper for a disk brake according to one of the preceding claims, **characterized by** three bridge arms (32, 34, 36).

5. Floating calliper for a disk brake according to one of the preceding claims, **characterized in that** the bridge arms (32, 34, 36) are connected at the support side by a cross strut (24).

6. Floating calliper for a disk brake according to one of the preceding claims, **characterized in that** the bridge arms (32, 34, 36) in their longitudinal direction are aligned with a supporting finger (26, 28, 30) each of the support, the supporting fingers (26, 28, 30) being disposed substantially at right angles to the longitudinal direction of the bridge arms (32, 34, 36).

7. Floating calliper for a disk brake according to one of the preceding claims, **characterized in that** the bridge arms (32, 34, 36) extend separately from one another over substantially the entire distance between the actuating cylinders (16, 18) and the support (24, 26, 28, 30).

8. Floating calliper for a disk brake according to claims 3 and 4, **characterized in that** only the middle bridge arm (34) is bifurcated and one of its fork branches (34a, 34b) each leads to one of the two actuating cylinders (16, 18).

9. Floating calliper for a disk brake according to one of claims 2 to 8, **characterized in that** the longitudinal axes (La, Lb) of the fork branches (34a, 34b) of the middle bridge arm (34) extend at angles (α) of between 3° and 15° relative to the axial direction (A) of the brake.

10. Floating-calliper disk brake having a floating calliper according to one of claims 1 to 9.

## Revendications

1. Etrier flottant pour un frein à disque, qui présente au moins deux cylindres d'actionnement (16,18), en face desquels est disposé un appui de mâchoire de frein (24, 26, 28, 30), au moins un bras de pontage (34), qui relie les cylindres d'actionnement (16, 18) à l'appui (24, 26, 28, 30), présentant une forme de fourche,
**caractérisé en ce que**
le bras de pontage (34) en forme de fourche se divise en deux branches (34a, 34b) qui sont chacune dirigées, à distance l'une de l'autre, vers l'un des cylindres d'actionnement (13, 18).

2. Etrier flottant pour un frein à disque suivant la revendication 1, **caractérisé en ce que** la fourche est située au moins sensiblement au milieu entre les cylindres d'actionnement (16,18) et l'appui (24, 26, 28, 30).

3. Etrier flottant pour un frein à disque suivant la revendication 2, **caractérisé en ce que** l'étrier flottant (10) présente deux cylindres d'actionnement (16,18) et **en ce que** chacune des deux branches (34a, 34b) formant la fourche conduit à l'un des cylindres d'actionnement (16,18).

4. Etrier flottant pour un frein à disque suivant l'une des revendications précédentes, **caractérisé par** trois bras de pontage (32, 34, 36).

5. Etrier flottant pour un frein à disque suivant l'une des revendications précédentes, **caractérisé en ce que** les bras de pontage (32, 34, 36) sont reliés sur les côtés de l'appui par une barre transversale (24).

6. Etrier flottant pour un frein à disque suivant l'une des revendications précédentes, **caractérisé en ce que** les bras de pontage (32, 34, 36) sont chacun alignés, dans leur direction longitudinale, avec un doigt d'appui (26, 28, 30) de l'appui, les doigts d'appui (26, 28, 30) étant approximativement perpendiculaires à la direction longitudinale des bras de pontage (32, 34, 36).

7. Etrier flottant pour un frein à disque suivant l'une des revendications précédentes, **caractérisé en ce que** les bras de pontage (32, 34, 36) ont, sensiblement sur toute la distance entre les cylindres d'actionnement (16,18) et l'appui (24), un tracé séparés les uns des autres.

8. Etrier flottant pour un frein à disque suivant les revendications 3 et 4, **caractérisé en ce que** seul le bras de pontage du milieu (34) forme une fourche et **en ce que** chacune des branches (34a, 34b) de celui-ci, formant la fourche, conduit à l'un des deux cylindres d'actionnement (16,18).

9. Etrier flottant pour un frein à disque suivant l'une des revendications 2 à 8, **caractérisé en ce que** les axes longitudinaux (La, Lb) des branches (34a, 34b),formant la fourche, du bras de pontage du milieu (34) ont une direction donnée par un angle (α) compris entre 3° et 15° par rapport à la direction axiale (A) du frein.

10. Frein à disque à étrier flottant comportant un étrier flottant suivant l'une des revendications 1 à 9.
